# EUROPEAN PATENT APPLICATION

(11) **EP 4 718 816 A1**
(43) Date of publication of application: **01.04.2026**
(21) Application number: 23938122.1
(22) Date of filing: 04.08.2023
(51) Int. Cl.: H04L 61/5046, H04B 3/54

(54) **METHOD AND APPARATUS FOR POWER LINE CARRIER COMMUNICATION, AND PHOTOVOLTAIC SYSTEM**

(30) Priority: 23.05.2023 CN 202310601906
(71) Applicant: Sungrow Power Supply Co., Ltd., Hefei, Anhui 230088 (CN)
(72) Inventor: QIN, Kun, Hefei, Anhui 230088 (CN); MIAO, Xiaofei, Hefei, Anhui 230088 (CN); XIE, Jiale, Hefei, Anhui 230088 (CN)
(74) Representative: Prinz & Partner mbB
(86) International application number: PCT/CN2023/111131
(87) International publication number: WO 2024/239453

(57) **Abstract**

Provided in the present application are a method and apparatus for power line carrier communication, and a photovoltaic system. The method comprises: a master node sending at least one debugging frame to at least one slave node on the basis of a target power line branch; the master node receiving at least one response frame corresponding to each debugging frame in the at least one debugging frame; the master node determining a signal strength corresponding to each response frame in the at least one response frame corresponding to each debugging frame; the master node determining a target address meeting a set signal strength condition from addresses of slave nodes corresponding to all response frames on the basis of the signal strength corresponding to each response frame; and the master node establishing a topological relationship between the target power line branch and the target address.

## Description

This application claims the priority to Chinese Patent Application No. 2023106019068, titled "METHOD AND APPARATUS FOR POWER LINE CARRIER COMMUNICATION, AND PHOTOVOLTAIC SYSTEM", filed on May 23, 2023 with the China National Intellectual Property Administration, which is incorporated herein by reference in its entirety.

### FIELD

The present disclosure relates to the technical field of photovoltaics, and in particular to a method and an apparatus for power line communication, and a photovoltaic system.

### BACKGROUND

In photovoltaic systems, it is required to acquire data such as power generations and operation parameters of inverters, combiner boxes, optimizers, and other devices.

In the related art, an inverter serves as a master node for communication, and a device (such as a combiner box and an optimizer) connected to the inverter serve as a slave node for communication. The master node and the slave node may exchange data through PLC (Power Line Communication) to acquire data.

However, the master node often fails to transmit and receive data through an actual power line branch between the master node and the slave node, resulting in unreliable data exchange between the master node and the slave node through the PLC.

### SUMMARY

Following technical solutions are provided according to the present disclosure.

According to a first aspect of the present disclosure, a method for power line communication is provided. The method is applied to a photovoltaic system. The photovoltaic system includes at least one master node and at least one slave node. The method includes: transmitting, by the master node, one or more debugging frames to the at least one slave node through a target power line branch; receiving, by the master node, one or more response frames corresponding to each of the debugging frames, where the response frames correspond to one of the at least one slave node, and the response frames includes at least an address of the slave node; determining, for each of the debugging frames by the master node, a signal strength corresponding to each of the response frames corresponding to the debugging frame; determining, by the master node based on signal strengths corresponding to all the response frames, a target address meeting a predetermined signal strength condition from addresses of slave nodes corresponding to all the response frames; and establishing, by the master node, a topological relationship between the target power line branch and the target address.

In an embodiment, the method further includes: exchanging data, by the master node, with a slave node corresponding to the target power line branch based on the topological relationship.

In an embodiment, before the transmitting, by the master node, the one or more debugging frames to the at least one slave node through the target power line branch, the method further includes: determining, by the master node, one of multiple power line branches as the target power line branch.

In an embodiment, the determining, for each of the debugging frames by the master node, a signal strength corresponding to each of the response frames corresponding to the debugging frame includes: determining, for each of the debugging frames by the master node, a signal strength of a slave node response signal corresponding to each of the response frames corresponding to the debugging frame.

In an embodiment, the response frame further includes a signal strength of a master node debugging signal corresponding to the debugging frame.

In an embodiment, the determining, for each of the debugging frames by the master node, a signal strength corresponding to each of the response frames corresponding to the debugging frame includes: determining, for each of the debugging frames by the master node, a signal strength of a slave node return signal corresponding to each of the response frames corresponding to the debugging frame; obtaining, by the master node, a signal strength of a master node debugging signal corresponding to the debugging frame in each of the response frames; and determining, for each of the response frames by the master node, the signal strength corresponding to the response frame based on the signal strength of the slave node return signal corresponding to the response frame and the signal strength of the master node debugging signal corresponding to the debugging frame in the response frame.

In an embodiment, in a case that the one or more debugging frames include only one debugging frame, the determining, by the master node based on signal strengths corresponding to all the response frames, a target address meeting a predetermined signal strength condition from addresses of slave nodes corresponding to all the response frames includes: comparing, by the master node, the signal strengths corresponding to all the response frames to determine a target response frame with a strongest signal strength from all the response frames; and determining, by the master node, an address of a slave node in the target response frame as the target address.

In an embodiment, in a case that the one or more debugging frames include multiple debugging frames, the determining, by the master node based on signal strengths corresponding to all the response frames, a target address meeting a predetermined signal strength condition from addresses of slave nodes corresponding to all the response frames includes: determining, by the master node based on the addresses of the slave nodes corresponding to all the response frames, response frames corresponding to the addresses of all the slave nodes from all the response frames; determining, by the master node based on signal strengths corresponding to the response frames corresponding to the addresses of all the slave nodes, signal strengths corresponding to the addresses of all the slave nodes; and comparing, by the master node, the signal strengths corresponding to the addresses of all the slave nodes to determine a target address with a strongest signal strength from the addresses of all the slave nodes.

In an embodiment, the determining, by the master node based on signal strengths corresponding to the response frames corresponding to the addresses of all the slave nodes, signal strengths corresponding to the addresses of all the slave nodes includes: determining, for each of the addresses of all the slave nodes by the master node, an average value and/or a variance value of the signal strengths corresponding to the response frames corresponding to an address of the slave node as a signal strength corresponding to the address of the slave node.

In an embodiment, after determining, by the master node based on the signal strengths corresponding to all the response frames, the target address meeting the predetermined signal strength condition from the addresses of the slave nodes corresponding to all the response frames, the method further includes: performing, by the master node in a case that target addresses are determined for all the target power line branches and the target addresses include duplicate target addresses, deduplication processing on the target addresses corresponding to all the target power line branches. The establishing, by the master node, a topological relationship between the target power line branch and the target address includes: establishing, by the master node, a topological relationship between all the target power line branches and the target addresses after deduplication processing corresponding to all the target power line branches.

In an embodiment, after establishing, by the master node, the topological relationship between the target power line branch and the target address, the method further includes: obtaining, by the master node, a communication message; and transmitting, by the master node, the communication message to the target power line branch in the topological relationship in a case that a target slave node address in the communication message is same as the target address in the topological relationship. Thus, a slave node corresponding to the target slave node address receives the communication message through the target power line branch, responds to the communication message and returns data.

In an embodiment, after establishing, by the master node, the topological relationship between the target power line branch and the target address, the method further includes: storing, by the master node, a topological relationship between all target power line branches and target addresses corresponding to the target power line branches.

According to a second aspect of the present disclosure, an apparatus for power line communication is provided. The apparatus includes: a transmitting module, a receiving module, a first determination module, a second determination module, and an establishment module. The transmitting module is configured to transmit one or more debugging frames to at least one slave node through a target power line branch. The receiving module is configured to receive one or more response frames corresponding to each of the debugging frames, where the response frames correspond to one of the at least one slave node, and the response frames include at least an address of the slave node. The first determination module is configured to determine, for each of the debugging frames, a signal strength corresponding to each of the response frames corresponding to the debugging frame. The second determination module is configured to determine, based on signal strengths corresponding to all the response frames, a target address meeting a predetermined signal strength condition from addresses of slave nodes corresponding to all the response frames. The establishment module is configured to establish a topological relationship between the target power line branch and the target address.

According to a third aspect of the present disclosure, a photovoltaic system is provided. The photovoltaic system includes at least one master node and at least one slave node. The master node includes an inverter, and the slave node includes a combiner box or an optimizer. The inverter is configured to: transmit one or more debugging frames to a combiner box or an optimizer corresponding to the inverter through a target power line branch; receive one or more response frames corresponding to each of the debugging frames, where the response frames correspond to one of the combiner box or the optimizer corresponding to the inverter, and the response frames include at least an address of the combiner box or the optimizer; determine, for each of the debugging frames, a signal strength corresponding to each of the response frames corresponding to the debugging frame; determine, based on signal strengths corresponding to all the response frames, a target address meeting a predetermined signal strength condition from addresses of combiner boxes or optimizers corresponding to all the response frames; and establish a topological relationship between the target power line branch and the target address. The combiner box or the optimizer is configured to response to the debugging frames and return response frames to the inverter.

According to the above solutions, a method and an apparatus for power line communication, and a photovoltaic system are provided according to the present disclosure. The method for power line communication is applied to a photovoltaic system which includes at least one master node and at least one slave node. The method includes: transmitting, by the master node, one or more debugging frames to the at least one slave node through a target power line branch; receiving, by the master node, one or more response frames corresponding to each of the debugging frames, where the response frames correspond to one of the at least one slave node, and the response frames includes at least an address of the slave node; determining, for each of the debugging frames by the master node, a signal strength corresponding to each of the response frames corresponding to the debugging frame; determining, by the master node based on signal strengths corresponding to all the response frames, a target address meeting a predetermined signal strength condition from addresses of slave nodes corresponding to all the response frames; and establishing, by the master node, a topological relationship between the target power line branch and the target address.

### BRIEF DESCRIPTION OF THE DRAWINGS

To describe technical solutions in the embodiments of the present disclosure clearly, accompanying drawings required for describing the embodiments are briefly introduces as follows. Apparently, the accompanying drawings in the following description show only some embodiments of the present disclosure, and those skilled in the art may obtain other drawings from these accompanying drawings without creative efforts.
FIG. 1 is a flowchart of a method for power line communication according to a first embodiment of the present disclosure;
FIG. 2 is a schematic diagram of an implementation scenario of the method for power line communication according to the first embodiment of the present disclosure;
FIG. 3 is a schematic diagram of a topological relationship according to the first embodiment of the present disclosure;
FIG. 4 is a schematic diagram of another implementation scenario of the method for power line communication according to the first embodiment of the present disclosure;
FIG. 5 is a schematic diagram of another implementation scenario of the method for power line communication according to the first embodiment of the present disclosure;
FIG. 6 is a flowchart of a method for power line communication according to a second embodiment of the present disclosure;
FIG. 7 is a flowchart of a method for power line communication according to a third embodiment of the present disclosure;
FIG. 8 is a flowchart of a method for power line communication according to a fourth embodiment of the present disclosure;
FIG. 9 is a flowchart of a method for power line communication according to a fifth embodiment of the present disclosure;
FIG. 10 is a flowchart of a method for power line communication according to a sixth embodiment of the present disclosure;
FIG. 11 is a flowchart of a method for power line communication according to a seventh embodiment of the present disclosure;
FIG. 12 is a schematic diagram of an implementation scenario of the method for power line communication according to the seventh embodiment of the present disclosure;
FIG. 13 is a flowchart of a method for power line communication according to an eighth embodiment of the present disclosure;
FIG. 14 is a flowchart of a method for power line communication according to a ninth embodiment of the present disclosure; and
FIG. 15 is a schematic structural diagram of an apparatus for power line communication according to the present disclosure.

### DETAILED DESCRIPTION

The solutions in the embodiments of the present disclosure are described clearly and completely hereinafter in conjunction with the accompanying drawings in the embodiments of the present disclosure. It is apparent that the described embodiments are only a part of the embodiments of the present disclosure rather than all of the embodiments. Based on the embodiments of the present disclosure, all other embodiments obtained by those skilled in the art without any creative work fall into the protection scope of the present disclosure.

The present disclosure will be further described in detail below in conjunction with the accompanying drawings and specific implementations, so that the above objects, features and advantages of the present disclosure are understandable.

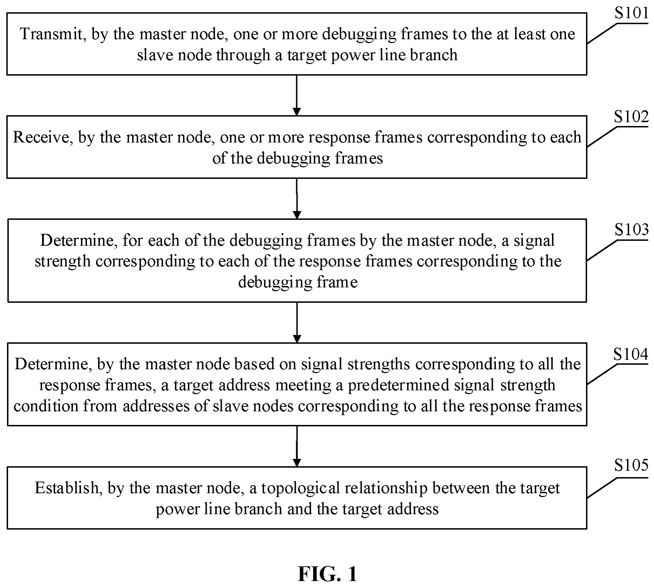

A method for power line communication is provided according to the present disclosure. The method may be applied to a photovoltaic system. The photovoltaic system includes at least one master node and at least one slave node. Reference is made to FIG. 1, which is a flowchart of a method for power line communication according to a first embodiment of the present disclosure. As shown in FIG. 1, the method may include but is not limited to the following steps S101 to S105.

In step S101, the master node transmits one or more debugging frames to the at least one slave node through a target power line branch.

In the embodiment, a master node may correspond to one or more power line branches, and each of the power line branches may be connected to a slave node. The slave nodes connected to the power line branches may be different.

For a master node, a corresponding PLC master node may be configured. For a slave node, a corresponding PLC slave node may be configured.

For each of the debugging frames, the PLC master node may modulate the debugging frame with a coupling technology to obtain a master node debugging signal corresponding to the debugging frame. Thus, at least one master node debugging signal is obtained. Then, the at least one master node debugging signal is transmitted to a slave node through the target power line branch.

In the present disclosure, the coupling technology is not limited. For example, the coupling technology may be but is not limited to a magnetic ring coupling technology.

In the embodiment, the master node may include but is not limited to an inverter, and the slave node may include but is not limited to a combiner box or an optimizer.

The inverter may include one or more inverter units. For each of the inverter units, a PLC master node may be configured. Each of the inverter units may correspond to multiple slave nodes. For each of the slave nodes, a PLC slave node may be configured.

In step S102, the master node receives one or more response frames corresponding to each of the debugging frames.

The response frames correspond to one of the at least one slave node, and the response frames include at least an address of the slave node.

In an embodiment, a slave node corresponding to the target power line branch may obtain one or more master node debugging signals from the target power line branch via a PLC slave node, demodulate each of the master node debugging signals to obtain a debugging frame, respond to all debugging frames to obtain response frames, modulate each of the response frames to a slave node response signal by using the coupling technology, and transmit a slave node response signal to the master node through the target power line branch.

Correspondingly, a master node may receive, via a PLC master node, at least one slave node response signal corresponding to each of master node debugging signals.

It should be understood that in a case that the master node corresponds to multiple power line branches, a crosstalk may occur between the multiple power line branches, and the one or more debugging frames may reach a slave node corresponding to another power line branch other than the target power line branch. Thus, in addition to receiving a response frame from the slave node corresponding to the target power line branch, the master node may also receive a response frame from the slave node corresponding to the another power line branch.

The PLC slave nodes configured for the slave nodes starts timing simultaneously after receiving the debugging frames, and the PLC slave nodes reply with response frames to the PLC master node in sequence based on predetermined slave node address time slices (such as 40ms). For example, a PLC slave node configured for a slave node 1 replies with a response frame at 40ms, a PLC slave node configured for a slave node 2 replies with a response frame at 80ms, a PLC slave node configured for a slave node 3 replies with a response frame at 120ms, a PLC slave node configured for a slave node 4 replies with a response frame at 160ms, and a PLC slave node configured for a slave node 5 replies with a response frame at 200ms.

At least one response frame corresponding to each of the debugging frames includes a response frame from the slave node corresponding to the target power line branch, and may include a response frame from a slave node corresponding to another power line branch other than the target power line branch.

In step S103, for each of the debugging frames, the master node determines a signal strength corresponding to each of the response frames corresponding to the debugging frame.

After obtaining the one or more response frames corresponding to each of the debugging frames via the PLC master node, the master node may determine, for each of the response frames, a signal strength corresponding to the response frame based on the response frame.

The signal strength corresponding to each of the response frames may include but is not limited to dBuv (signal voltage strength).

In step S104, the master node determines, based on signal strengths corresponding to all the response frames, a target address meeting a predetermined signal strength condition from addresses of slave nodes corresponding to all the response frames.

It should be understood that the signal strength corresponding to the response frame received by the master node from the target power line branch through the PLC master node differs from the signal strength corresponding to the response frame transmitted through another power line branch. After comparing the signal strengths corresponding to all the response frames, a target address meeting a predetermined signal strength condition may be determined from the addresses of the slave nodes corresponding to all the response frames.

The predetermined signal strength condition may be configured according to requirements, and is not limited in the present disclosure.

The target address meeting the predetermined signal strength condition may be used as an address of a combiner box actually corresponding to the target power line branch.

The step S104 may include but is not limited to: normalizing the signal strength corresponding to each of the response frames to obtain a normalized signal strength corresponding to each of the response frames; and determining a target address meeting the predetermined signal strength condition from addresses of combiner boxes corresponding to all the response frames based on the normalized signal strength corresponding to each of the response frames.

In step S105, the master node establishes a topological relationship between the target power line branch and the target address.

It should be understood that steps S101 to S105 correspond to an execution process for a master node corresponding to one power line branch. In a case that the master node corresponds to multiple power line branches, the step S101 may include but is not limited to the following step S1011.

In step S1011, the master node determines one of the multiple power line branches as the target power line branch, and transmits one or more debugging frames to at least one slave node through the target power line branch.

Corresponding to the step S1011, the master node may, for each of the power line branches, establish a topological relationship between the power line branch and a target address corresponding to the power line branch.

In an embodiment, the master node selects one of the multiple power line branches as the target power line branch, and waits for a response from the slave node in a predetermined time period. The predetermined time period may be configured according to requirements, and is not limited in the present disclosure. For example, the predetermined time period may be configured to 2 seconds.

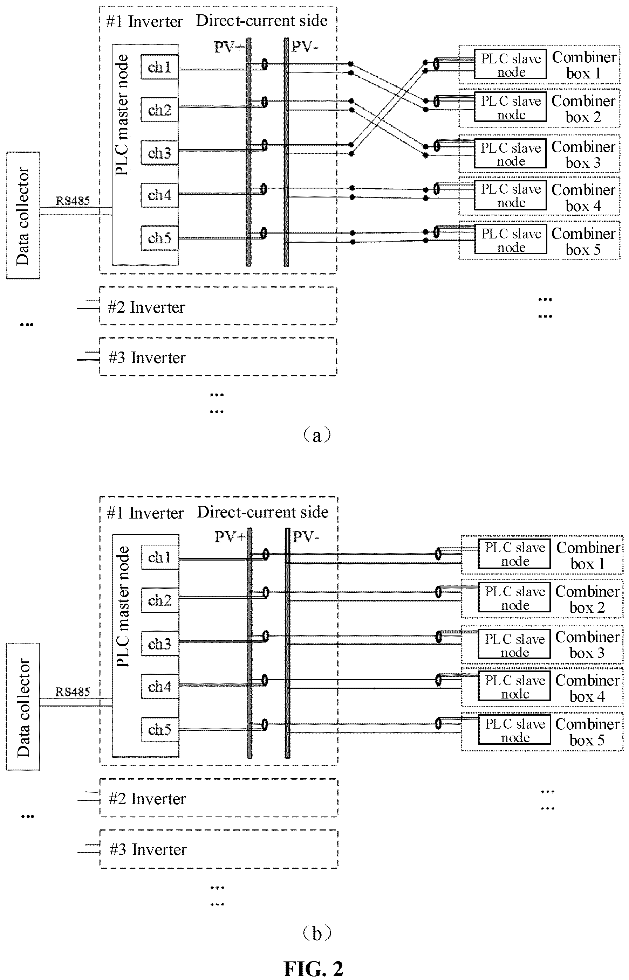

In the embodiment, the master node transmits one or more debugging frames to at least one slave node through a target power line branch, receives one or more response frames corresponding to each of the debugging frames, determines, for each of the debugging frames, a signal strength corresponding to each of the response frames corresponding to the debugging frame, determines, based on signal strengths corresponding to all the response frames, a target address meeting a predetermined signal strength condition from addresses of slave nodes corresponding to all the response frames to obtain the address of the slave node actually corresponding to the target power line branch. Then, the master node establishes a topological relationship between the target power line branch and the target address. In this way, the accuracy of the topological relationship is ensured. When it is required to exchange data with the slave node, the master node may determines the power line branch actually corresponding to the slave node based on the accurate topological relationship, and then exchange data through the actually corresponding power line branch, thereby ensuring reliability of data exchange. For example, the master node is an inverter, the slave node is a combiner box, one inverter corresponds to five combiner boxes, and the PLC master node and PLC slave node transmit and receive signals through magnetic ring coupling. Taking an inverter #1 as an example, the actual connection between the inverter #1 and combiner boxes is shown in part (a) of FIG. 2, where a power line branch corresponding to ch1 corresponds to a combiner box 2, a power line branch corresponding to ch2 corresponds to a combiner box 3, a power line branch corresponding to ch3 corresponds to a combiner box 1, a power line branch corresponding to ch4 corresponds to a combiner box 4, and a power line branch corresponding to ch5 corresponds to a combiner box 5.

In a case that a PLC master node of the inverter #1 does not know the actual connections of the power line branches corresponding to the inverter #1 and transmits and receives data according to a topological relationship corresponding to the connection as shown in part (b) of FIG. 2, messages to be transmitted to the combiner box 1 are transmitted to the combiner box 1 through the power line branch corresponding to ch1, messages to be transmitted to the combiner box 2 are transmitted to the combiner box 2 through the power line branch corresponding to ch2, messages to be transmitted to the combiner box 3 are transmitted to the combiner box 3 through the power line branch corresponding to ch3. Since the messages are not transmitted through the actual power line branches, the combiner box 1, the combiner box 2 and the combiner box 3 may not receive the messages, resulting in transmitting and receiving errors.

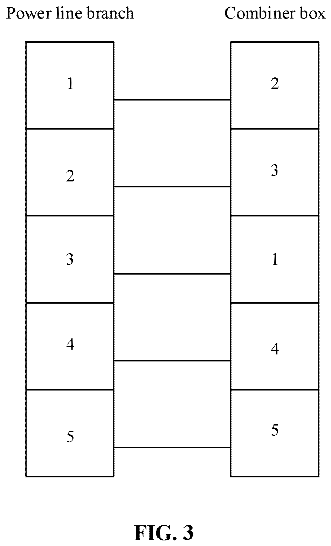

With the method for power line communication according to the first embodiment, a topological relationship as shown in FIG. 3 may be determined. According to the topological relationship shown in FIG. 3, data may be transmitted and received through the actual power line branches shown in part (a) of FIG. 2, thereby improving the reliability of data exchange.

It should be noted that FIG. 2 only shows an example of communication between the master node and the slave node, and is not intended to limit the master node and the slave node.

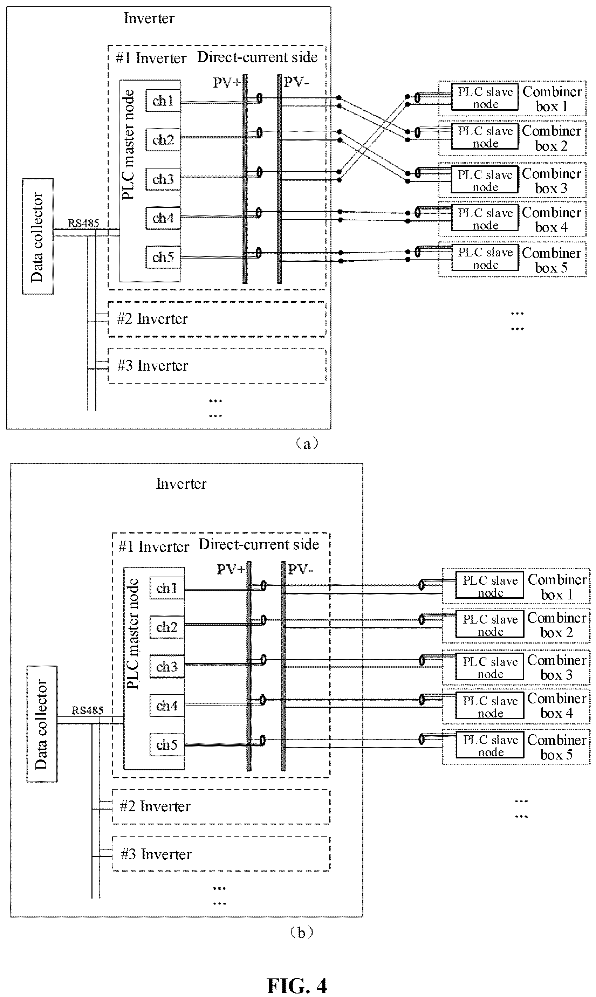

Corresponding to an inverter including one or more inverter units, for example, the master node is an inverter, the slave node is a combiner box, the inverter includes multiple inverter units, each of the inverter units corresponds to five combiner boxes, a PLC master node and a PLC slave node transmit and receive signals through magnetic ring coupling. Taking an inverter unit #1 as an example, the actual connection between the inverter unit #1 and combiner boxes is shown in part (a) of FIG. 4, where a power line branch corresponding to ch1 corresponds to a combiner box 2, a power line branch corresponding to ch2 corresponds to a combiner box 3, a power line branch corresponding to ch3 corresponds to a combiner box 1, a power line branch corresponding to ch4 corresponds to a combiner box 4, and a power line branch corresponding to ch5 corresponds to a combiner box 5.

In a case that a PLC master node of the inverter unit #1 does not know the actual connections of the power line branches corresponding to the inverter unit #1 and transmits and receives data according to a topological relationship corresponding to the connection as shown in part (b) of FIG. 4, message to be transmitted to the combiner box 1 is transmitted to the combiner box 1 through the power line branch corresponding to the ch1, message to be transmitted to the combiner box 2 is transmitted to the combiner box 2 through the power line branch corresponding to the ch2, and message to be transmitted to the combiner box 3 is transmitted to the combiner box 3 through the power line branch corresponding to the ch3. Since the messages are not transmitted through the actual power line branches, the combiner box 1, the combiner box 2 and the combiner box 3 may not receive the messages, resulting in transmitting and receiving errors.

With the method for power line communication according to the first embodiment, a topological relationship as shown in FIG. 3 may be determined. According to the topological relationship shown in FIG. 3, data may be transmitted and received through the actual power line branches shown in part (a) of FIG. 4, thereby improving the reliability of data exchange.

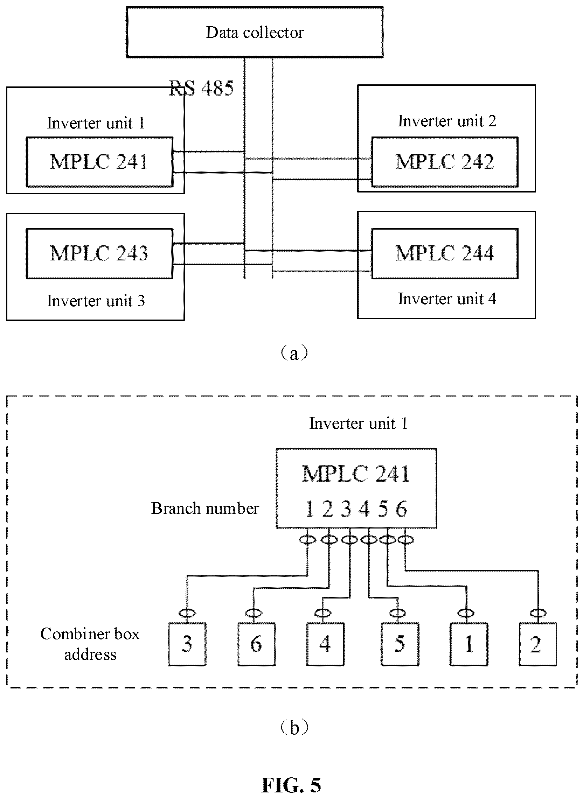

It should be noted that FIG. 4 only shows an example of the master node and the slave node, and is not intended to limit the master node and the slave node. The number of the inverter unit and the number of the combiner box are not limited to the inverter units and the combiner boxes shown in FIG. 4, and the inverter unit and the combiner box may be configured according to actual project requirements. For example, the master node is an inverter, the slave node is a combiner box, the inverter has multiple inverter units, and the power of the inverter unit is 1.1MW. Corresponding to a 4.4MW photovoltaic array, four inverter units are configured. For each of the inverter units, a PLC master node is configured. The PLC master nodes are connected to a data collector through a RS485 bus. As shown in part (a) of FIG. 5, a PLC master node MPLC241 is configured for an inverter unit 1, a PLC master node MPLC242 is configured for an inverter unit 2, a PLC master node MPLC243 is configured for an inverter unit 3, and a PLC master node MPLC244 is configured for an inverter unit 4. A 1.1MW direct-current power in the 4.4MW photovoltaic array is combined and fed to the inverter unit through six combiner boxes. Each of the inverter units corresponds to six combiner boxes.

Taking an inverter unit 1 as an example, corresponding to a power line branch 1 of the inverter unit 1, a target address is determined to be a combiner box address 3; corresponding to a power line branch 2 of the inverter unit 1, a target address is determined to be a combiner box address 6; corresponding to a power line branch 3 of the inverter unit 1, a target address is determined to be a combiner box address 4; corresponding to a power line branch 4 of the inverter unit 1, a target address is determined to be a combiner box address 5; corresponding to a power line branch 5 of the inverter unit 1, a target address is determined to be a combiner box address 1; and corresponding to a power line branch 6 of the inverter unit 1, a target address is determined to be a combiner box address 2.

As shown in part (b) of FIG. 5, a topological relationship of a branch number 1 corresponding to the combiner box address 3 is established for the power line branch 1, a topological relationship of a branch number 2 corresponding to the combiner box address 6 is established for the power line branch 2, a topological relationship of a branch number 3 corresponding to the combiner box address 4 is established for the power line branch 3, a topological relationship of a branch number 4 corresponding to the combiner box address 5 is established for the power line branch 4, a topological relationship of a branch number 5 corresponding to the combiner box address 1 is established for the power line branch 5, and a topological relationship of a branch number 6 corresponding to the combiner box address 2 is established for the power line branch 6.

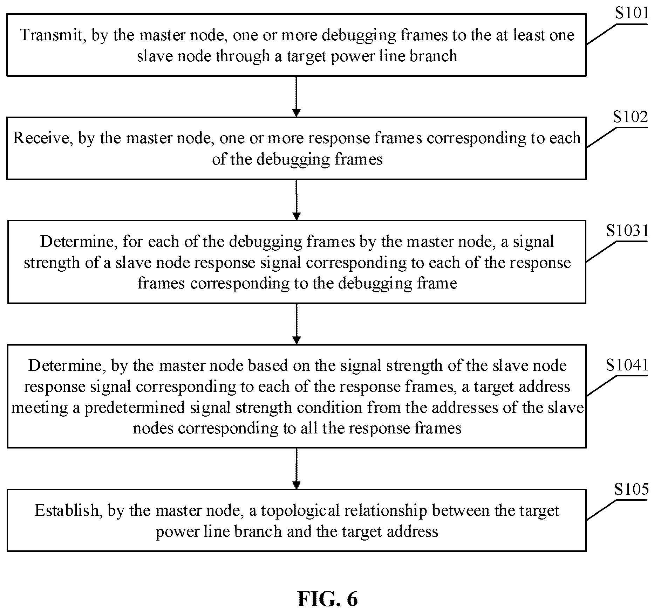

As another embodiment of the present disclosure, reference is made to FIG. 6, which is a flowchart of a method for power line communication according to a second embodiment of the present disclosure. In the embodiment, the step S103 in the above first embodiment is refined. As shown in FIG. 6, the step S103 may include but is not limited to the following step S1031.

In step S1031, the master node determines, for each of the debugging frames, a signal strength of a slave node response signal corresponding to each of the response frames corresponding to the debugging frame.

In the embodiment, corresponding to modulating each of the response frames to a slave node response signal, the master node may, after receiving at least one slave node response signal corresponding to each of master node debugging signals via the PLC master node, determine a signal strength for each of the at least one slave node response signal.

Correspondingly, the step S104 may include but is not limited to the following step S1041.

In step S1041, the master node determines, based on the signal strength of the slave node response signal corresponding to each of the response frames, a target address meeting a predetermined signal strength condition from the addresses of the slave nodes corresponding to all the response frames.

In the embodiment, the master node transmits one or more debugging frames to at least one slave node through a target power line branch, receives one or more response frames corresponding to each of the debugging frames, determines, for each of the debugging frames, a signal strength of a slave node response signal corresponding to each of the response frames corresponding to the debugging frame, determines, based on signal strengths of slave node response signals corresponding to all the response frames, a target address meeting a predetermined signal strength condition from addresses of slave nodes corresponding to all the response frames to obtain the address of the slave node actually corresponding to the target power line branch. Then, the master node establishes a topological relationship between the target power line branch and the target address. In this way, the accuracy of the topological relationship is ensured. When it is required to exchange data with the slave node, the master node may determines the power line branch actually corresponding to the slave node based on the accurate topological relationship, and then exchange data through the actually corresponding power line branch, thereby ensuring reliability of data exchange.

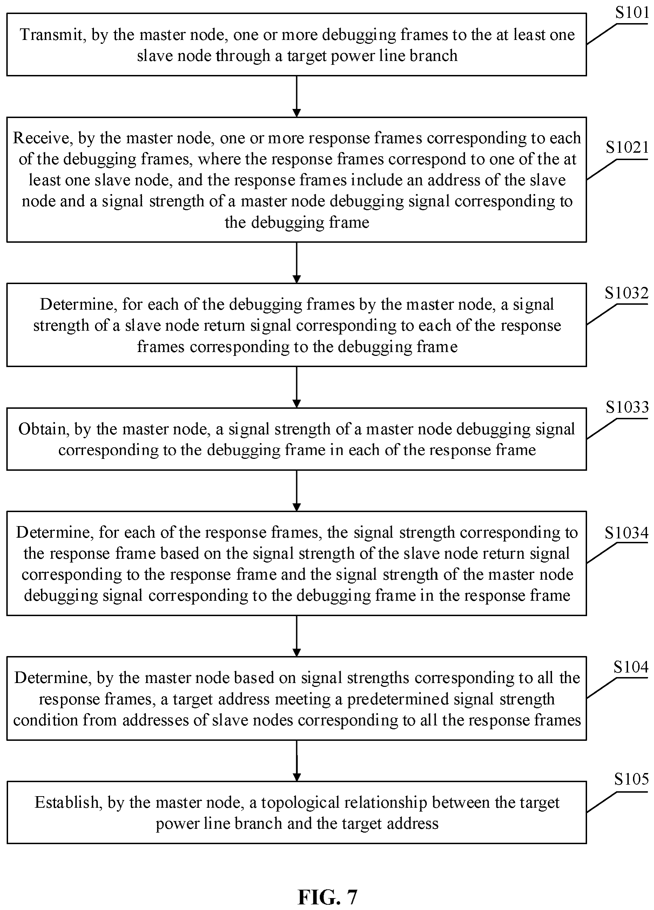

As another embodiment of the present disclosure, reference is made to FIG. 7, which is a flowchart of a method for power line communication according to a third embodiment of the present disclosure. In the embodiment, the step S102 and the step S103 in the above first embodiment are refined. As shown in FIG. 7, the step S102 may include but is not limited to the following step S1021.

In step S1021, the master node receives one or more response frames corresponding to each of the debugging frames. The response frames correspond to one of the at least one slave node, and the response frames include an address of the slave node and a signal strength of a master node debugging signal corresponding to the debugging frame.

In the embodiment, the slave node may receive the master node debugging signal corresponding to the debugging frame via the PLC slave node, and determine the signal strength of the master node debugging signal.

Corresponding to the step S1021, the step S103 may include but is not limited to the following steps S1032 to S1034.

In step S1032, the master node determines, for each of the debugging frames, a signal strength of a slave node return signal corresponding to each of the response frames corresponding to the debugging frame.

The detailed process of the step S1032 may refer to the descriptions of the step S1031 in the second embodiment, and is not repeated herein.

In step S1033, the master node obtains a signal strength of a master node debugging signal corresponding to the debugging frame in each of the response frame.

In step S1034, for each of the response frames, the signal strength corresponding to the response frame is determined based on the signal strength of the slave node return signal corresponding to the response frame and the signal strength of the master node debugging signal corresponding to the debugging frame in the response frame.

The step S1034 may include but is not limited to: averaging the signal strength of the slave node return signal corresponding to the response frame and the signal strength of the master node debugging signal corresponding to the debugging frame in the response frame to obtain an average signal strength, and determining the average signal strength as the signal strength corresponding to the response frame.

It should be noted that in a case that a response frame includes an address of a slave node and a signal strength of a master node debugging signal corresponding to a debugging frame, a method for power line communication is not limited to the method for power line communication in the embodiment, and the method for power line communication in the case that the response frame includes the address of the slave node and the signal strength of the master node debugging signal corresponding to the debugging frame all fall within the protection scope of the present disclosure.

In the embodiment, the master node determines, for each of the debugging frames, the signal strength of the slave node return signal corresponding to each of the response frames corresponding to the debugging frame, obtains the signal strength of the master node debugging signal corresponding to the debugging frame in each of the response frames, and determines, for each of the response frames, the signal strength corresponding to the response frame based on the signal strength of the slave node return signal corresponding to the response frame and the signal strength of the master node debugging signal corresponding to the debugging frame in response frame, thereby ensuring the reliability of the signal strength corresponding to the response frame. Based on the higher-reliability signal strengths corresponding to all the response frames, the target address meeting the predetermined signal strength condition is determined from the addresses of the slave nodes corresponding to all the response frames, so that the accuracy of the target address is improved, and the address of the combiner box actually corresponding to the power line branch is obtained. Then, a topological relationship between the target power line branch and the target address is established. In this way, the accuracy of the topological relationship is ensured. When it is required to exchange data with the slave node, the master node may determines the power line branch actually corresponding to the slave node based on the accurate topological relationship, and then exchange data through the actually corresponding power line branch, thereby ensuring reliability of data exchange.

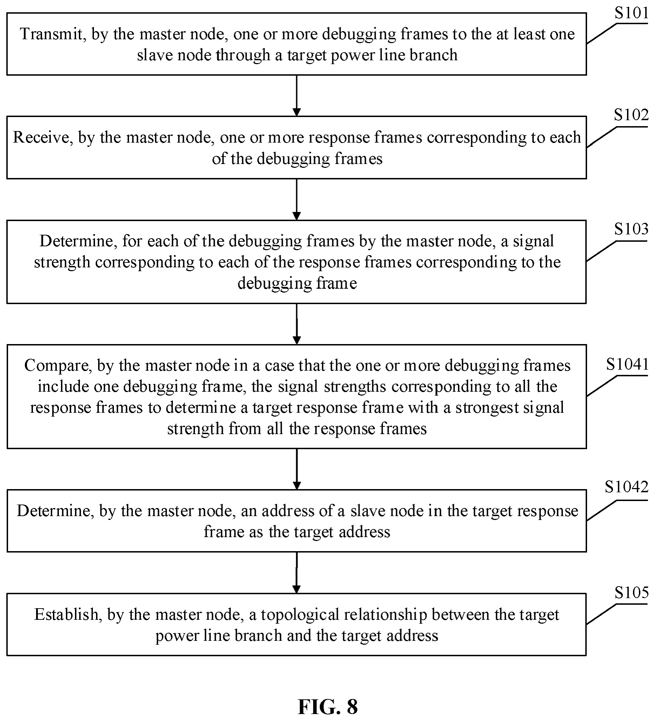

As another embodiment of the present disclosure, reference is made to FIG. 8, which is a flowchart of a method for power line communication according to a fourth embodiment of the present disclosure. In the embodiment, the step S104 in the above first embodiment is refined. As shown in FIG. 8, the step S104 may include but is not limited to the following steps S1041 and S1042.

In step S1041, in a case that the one or more debugging frames include one debugging frame, the master node compares the signal strengths corresponding to all the response frames to determine a target response frame with a strongest signal strength from all the response frames.

In step S1042, the master node determines an address of a slave node in the target response frame as the target address.

In the embodiment, the master node transmits one or more debugging frames to at least one slave node through a target power line branch, receives one or more response frames corresponding to each of the debugging frames, and determines, for each of the debugging frames, a signal strength corresponding to each of the response frames corresponding to the debugging frame. In a case that the one or more debugging frames include one debugging frame, the master node compares the signal strengths corresponding to all the response frames to determine a target response frame with a strongest signal strength from all the response frames, and determines an address of a slave node in the target response frame as the target address. Thus, the address of the slave node actually corresponding to the target power line branch is obtained. Then, the master node establishes a topological relationship between the target power line branch and the target address. In this way, the accuracy of the topological relationship is ensured. When it is required to exchange data with the slave node, the master node may determines the power line branch actually corresponding to the slave node based on the accurate topological relationship, and then exchange data through the actually corresponding power line branch, thereby ensuring reliability of data exchange.

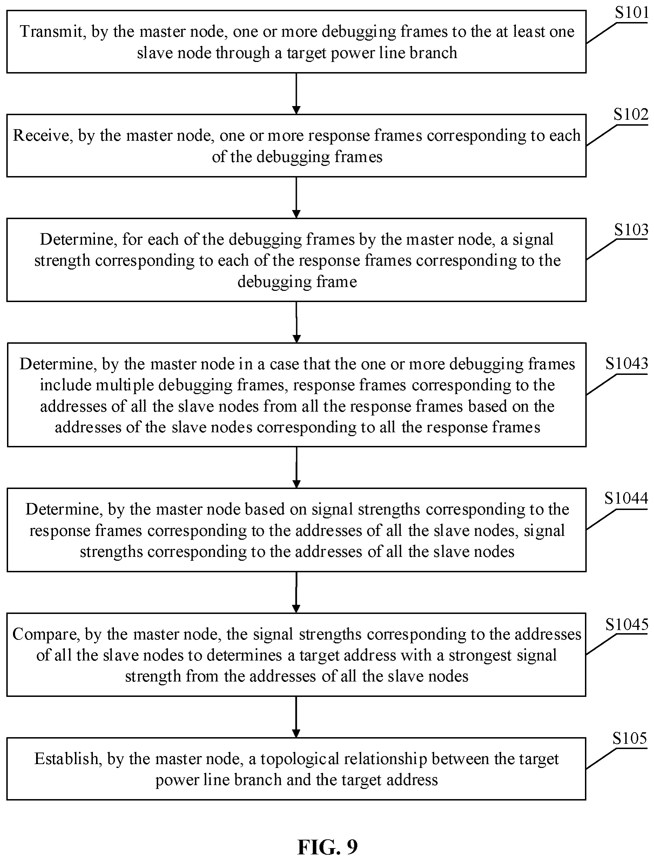

As another embodiment of the present disclosure, reference is made to FIG. 9, which is a flowchart of a method for power line communication according to a fifth embodiment of the present disclosure. In the embodiment, the step S104 in the above first embodiment is refined. As shown in FIG. 9, the step S104 may include but is not limited to the following steps S1043 to S1045.

In step S1043, in a case that the one or more debugging frames include multiple debugging frames, the master node determines, based on the addresses of the slave nodes corresponding to all the response frames, response frames corresponding to the addresses of all the slave nodes from all the response frames.

In a case that the one or more debugging frames include multiple debugging frames, corresponding to the multiple debugging frames, a same slave node may return multiple response frames, and the multiple response frames returned by the same slave node correspond to a same slave node address. That is, an address of each of the slave nodes may correspond to multiple response frames. In the embodiment, the addresses of the slave nodes corresponding to all the response frames may be compared, and the response frames corresponding to a same slave node address may be divided to a same group. Thus, multiple groups of response frames are obtained. The response frames in a same group of response frames may be determined as the response frames corresponding to the address of the corresponding slave node.

In step S1044, the master node determines, based on signal strengths corresponding to the response frames corresponding to the addresses of all the slave nodes, signal strengths corresponding to the addresses of all the slave nodes.

The step S1044 may include but is not limited to: determining, for each of the addresses of all the slave nodes by the master node, an average value and/or a variance value of the signal strengths corresponding to the response frames corresponding to an address of the slave node as a signal strength corresponding to the address of the slave node.

In step S1045, the master node compares the signal strengths corresponding to the addresses of all the slave nodes to determines a target address with a strongest signal strength from the addresses of all the slave nodes.

The master node compares the signal strengths corresponding to the addresses of all the slave nodes, determines the address of the slave node with the strongest signal strength from the addresses of all the slave nodes, and determines the address of the slave node with the strongest signal strength as the target address.

In the embodiment, the master node transmits multiple debugging frames through a target power line branch; determines, based on the addresses of the slave nodes corresponding to all the response frames, response frames corresponding to the addresses of all the slave nodes from all the response frames; determines, based on signal strengths corresponding to the response frames corresponding to the addresses of all the slave nodes, signal strengths corresponding to the addresses of all the slave nodes; and compares the signal strengths corresponding to the addresses of all the slave nodes to determines a target address with a strongest signal strength from the addresses of all the slave nodes, thereby improving the accuracy of the target address.

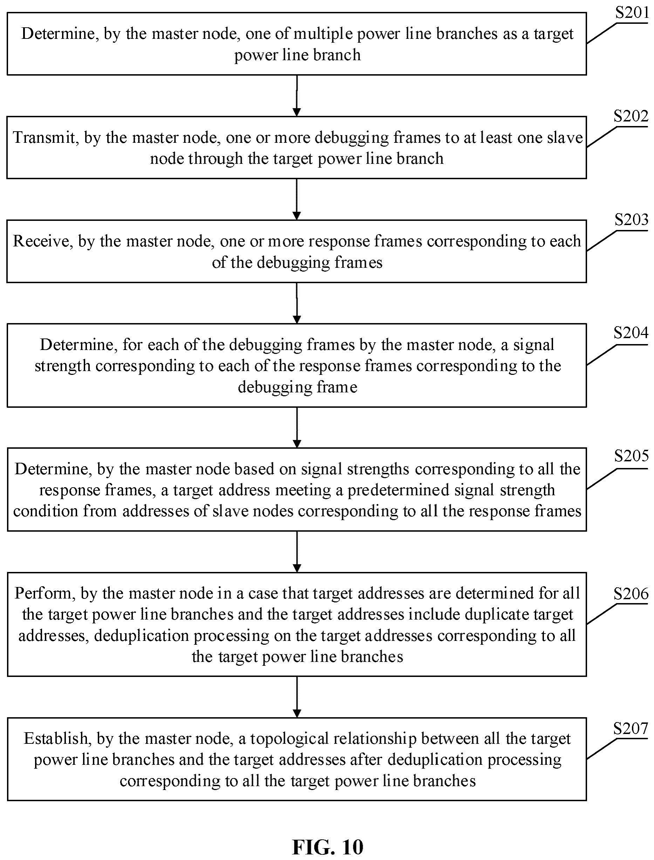

As another embodiment of the present disclosure, reference is made to FIG. 10, which is a flowchart of a method for power line communication according to a sixth embodiment of the present disclosure. In the embodiment, the method for power line communication according to the above first embodiment is extended. As shown in FIG. 10, the method may include but is not limited to the following steps S201 to S207.

In step S201, the master node determines one of multiple power line branches as a target power line branch.

In step S202, the master node transmits one or more debugging frames to at least one slave node through the target power line branch.

In step S203, the master node receives one or more response frames corresponding to each of the debugging frames. The response frames correspond to one of the at least one slave node, and the response frames includes at least an address of the slave node.

In step S204, the master node determines, for each of the debugging frames, a signal strength corresponding to each of the response frames corresponding to the debugging frame.

In step S205, the master node determines, based on signal strengths corresponding to all the response frames, a target address meeting a predetermined signal strength condition from addresses of slave nodes corresponding to all the response frames.

The detailed processes of the steps S202 to S205 may refer to the descriptions of the steps S101 to S104 in the first embodiment, and are not repeated herein.

It should be noted that in a case of determining one power line branch as the target power line branch from the multiple power line branches each time, it is required to perform the steps S202 to S205.

After the steps S202 to S205 are performed for each of the target power line branches, a target address corresponding to each of the target power line branches may be determined.

In step S206, the master node performs, in a case that target addresses are determined for all the target power line branches and the target addresses include duplicate target addresses, deduplication processing on the target addresses corresponding to all the target power line branches.

In the embodiment, the deduplication processing may be performed on the target addresses corresponding to all the target power line branches by but is not limited to: arranging branch numbers of target power line branches with duplicate target addresses in an ascending order to obtain a branch number arrangement result, and selecting address from available addresses as target addresses corresponding to the target power line branches with duplicate target addresses based on the branch number arrangement result.

The available addresses are different from the target addresses corresponding to the target power line branches, except for the target addresses corresponding to the target power line branches with duplicate target addresses.

In step S207, the master node establishes a topological relationship between all the target power line branches and the target addresses after deduplication processing corresponding to all the target power line branches.

The topological relationship is established after the deduplication processing, so that the accuracy of the topological relationship can be improved.

The step S207 is a specific implementation of the step S105 in the first embodiment.

It should be noted that FIG. 10 only illustrates the steps of the method for power line communication and is not intended to limit the actual implementation of the method for power line communication. The steps S202 to S207 in FIG. 10 are applicable to all the target power line branches.

It should be noted that the steps S201 to S205 and the step S105 in the above first embodiment may also be an implementation of the method for power line communication, and are within the scope of protection of the present disclosure.

In the embodiment, the target addresses corresponding to all the power line branches are obtained, it is determined that the target addresses corresponding to all the target power line branches include duplicate target addresses, and then deduplication processing is performed on the target addresses corresponding to all the target power line branches, thereby avoiding conflicts in the target addresses of the power line branches.

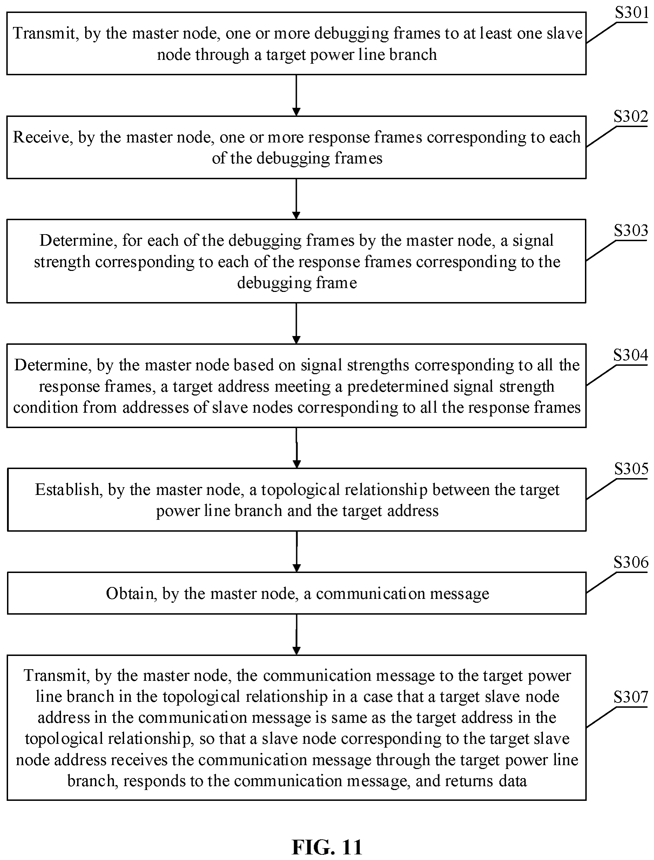

As another embodiment of the present disclosure, reference is made to FIG. 11, which is a flowchart of a method for power line communication according to a seventh embodiment of the present disclosure. In the embodiment, the method for power line communication according to the above first embodiment is extended. As shown in FIG. 11, the method may include but is not limited to the following steps S301 to S307.

In step S301, the master node transmits one or more debugging frames to at least one slave node through a target power line branch.

In step S302, the master node receives one or more response frames corresponding to each of the debugging frames. The response frames corresponds to one of the at least one slave node, and the response frames include at least an address of the slave node.

In step S303, the master node determines, for each of the debugging frames, a signal strength corresponding to each of the response frames corresponding to the debugging frame.

In step S304, the master node determines, based on signal strengths corresponding to all the response frames, a target address meeting a predetermined signal strength condition from addresses of slave nodes corresponding to all the response frames.

In step S305, the master node establishes a topological relationship between the target power line branch and the target address.

The detailed processes of the steps S301 to S205 may refer to the descriptions of the steps S101 to S105 in the first embodiment, and are not repeated herein.

In step S306, the master node obtains a communication message.

In the embodiment, a data collector may issue a communication message, and the communication message includes a target slave node address.

The communication message may be, but is not limited to, a Modbus-standard communication message.

All master nodes may receives the communication message, but only the master node, having a target address in the topological relationship matching the target slave node address, may process and respond to the communication message. For example, in a case that the master node is a centralized inverter and the slave node is a combiner box, PLC master nodes corresponding to each of inverter units of the centralized inverter may receive the communication message, but only the PLC master node having a target address in a topological relationship matching a target combiner box address may process and respond to the communication message.

In the embodiment, the PLC master node may include, but is not limited to, a power supply, a PLC master control chip, a PA amplifier circuit, an electronic switching circuit, and a coupling channel. Each of coupling channels may be individually controlled by a GPIO pin of a PLC master control chip to be turned on or turned off.

Each of coupling channels corresponds to a power line branch. Each of the coupling channel may modulate a data frame (such as, a debugging frame) of the PLC master control chip to obtain a master node debugging signal corresponding to the data frame, and then transmits the master node debugging signal to a power line branch.

In step S307, the master node transmits the communication message to the target power line branch in the topological relationship in a case that a target slave node address in the communication message is same as the target address in the topological relationship, so that a slave node corresponding to the target slave node address receives the communication message through the target power line branch, responds to the communication message, and returns data.

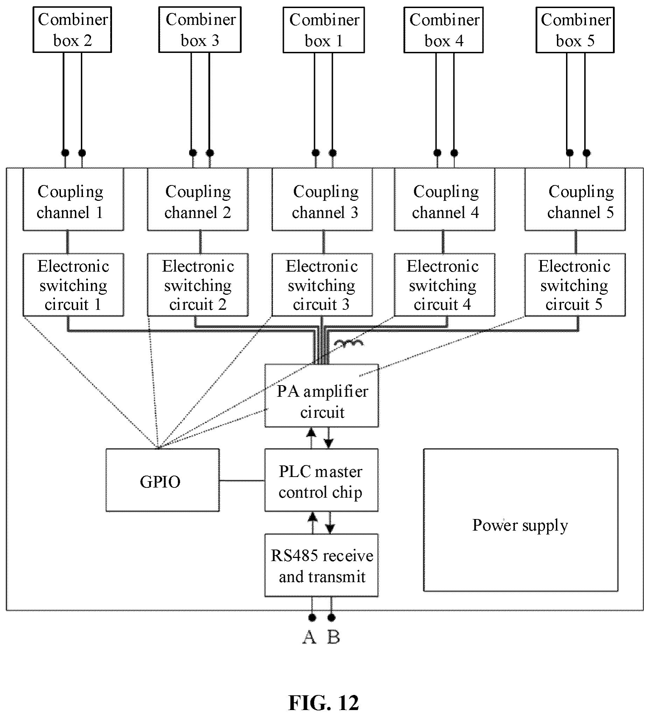

For example, as shown in FIG. 12, in a case that a power line branch corresponding to a coupling channel 1 corresponds to a combiner box 2, a power line branch corresponding to a coupling channel 2 corresponds to a combiner box 3, a power line branch corresponding to a coupling channel 3 corresponds to a combiner box 1, a power line branch corresponding to a coupling channel 4 corresponds to the combiner box 4 and a power line branch corresponding to a coupling channel 5 corresponds to a combiner box 5, if an address of a target combiner box in the communication message is an address of the combiner box 2, the PLC master control chip turns on an electronic switching circuit 1 through a GPIO pin to turn on the coupling channel 1, the PLC master control chip transmits the communication message in a digital signal form to the coupling channel 1, the coupling channel 1 modulates the communication message to an analog carrier signal, a PA amplifier circuit amplifies the analog carrier signal and transmits an obtained level to a magnetic loop coil, and the magnetic loop coil couples the communication message to the power line branch corresponding to the combiner box 2.

The PLC slave node corresponding to the combiner box 2 receives the analog carrier signal from the PLC master node through magnetic loop coil coupling, restores the analog carrier signal to a digital signal (that is, the communication message), and transmits the communication message to the master control chip of the combiner box 2 through a serial port.

After determining that the address of the target combiner box in the communication message matches the address of the combiner box 2, the master control chip of the combiner box 2 responds and generates a response message. The response message includes data corresponding to the combiner box (such as voltage data and current data of a photovoltaic panel). The master control chip of the combiner box 2 transmits the response message to the PLC slave node through the serial port, and the PLC slave node transmits the response message to the PLC master node.

The PLC master node may report the response message to the data collector, so that a round of data collection is performed.

In the embodiment, the communication message may be accurately transmitted to the combiner box based on the established topological relationship, thereby ensuring the reliability of data exchange.

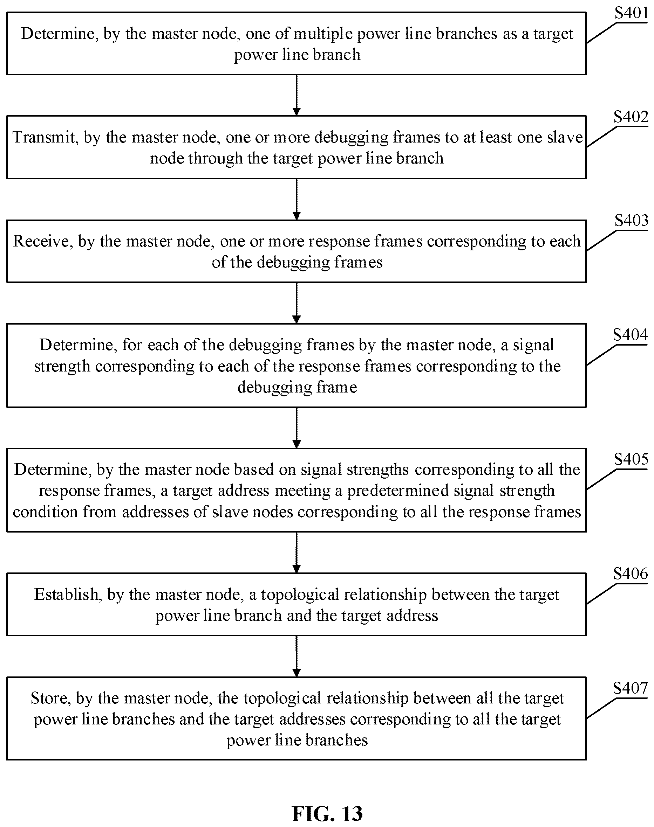

As another embodiment of the present disclosure, reference is made to FIG. 13, which is a flowchart of a method for power line communication provided according to an eighth embodiment of the present disclosure. In the embodiment, the method for power line communication according to the above first embodiment is extended. As shown in FIG. 13, the method may include, but is not limited to, the following steps S401 to S407.

In step S401, the master node determines one of multiple power line branches as a target power line branch.

In step S402, the master node transmits one or more debugging frames to at least one slave node through the target power line branch.

In step S403, the master node receives one or more response frames corresponding to each of the debugging frames. The response frames correspond to one of the at least one slave node, and the response frames include at least an address of the slave node.

In step S404, the master node determines, for each of the debugging frames, a signal strength corresponding to each of the response frames corresponding to the debugging frame.

In step S405, the master node determines, based on signal strengths corresponding to all the response frames, a target address meeting a predetermined signal strength condition from addresses of slave nodes corresponding to all the response frames.

The detailed processes of the steps S402 to S405 may refer to the descriptions of the steps S101 to S104 in the first embodiment, and are not repeated herein.

In step S406, the master node establishes a topological relationship between the target power line branch and the target address.

This step may be understood as: in a case of determining a target address for a target power line branch, the master node establishes a topological relationship between the target power line branch and the target address.

This step may also be understood as: in a case of determining target addresses for all the power line branches, the master node establishes a topological relationship between all the target power line branches and the target addresses corresponding to all the target power line branches.

The detailed processes of the steps S402 to S406 may refer to the descriptions of the steps S101 to S105 in the first embodiment, and are not repeated herein.

In step S407, the master node stores the topological relationship between all the target power line branches and the target addresses corresponding to all the target power line branches.

It should be noted that FIG. 13 only illustrates the steps of the method for power line communication and is not intended to limit the actual implementation of the method for power line communication. The steps S402 to S405 in FIG. 13 are applicable to all the target power line branches.

In the embodiment, the topological relationship between all the target power line branches and the target addresses corresponding to all the target power line branches is stored, and data exchange may be performed base on the stored topological relationship, improving the efficiency of data exchange.

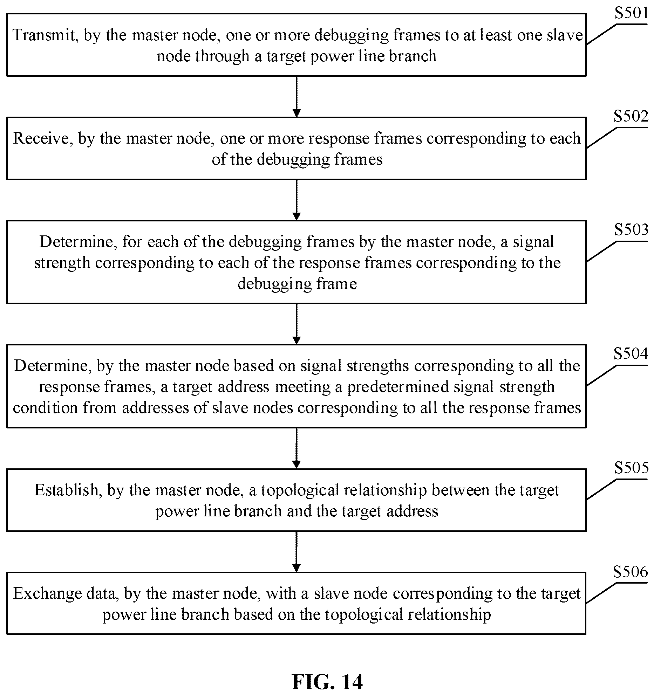

As another embodiment of the present disclosure, reference is made to FIG. 14, which is a flowchart of a method for power line communication provided according to a ninth embodiment of the present disclosure. In the embodiment, the method for power line communication according to the above first embodiment is extended. As shown in FIG. 14, the method may include, but is not limited to, the following steps S501 to S506.

In step S501, the master node transmits one or more debugging frames to at least one slave node through a target power line branch.

In step S502, the master node receives one or more response frames corresponding to each of the debugging frames. The response frames correspond to one of the at least one slave node, and the response frames includes at least an address of the slave node.

In step S503, the master node determines, for each of the debugging frames, a signal strength corresponding to each of the response frames corresponding to the debugging frame.

In step S504, the master node determines, based on signal strengths corresponding to all the response frames, a target address meeting a predetermined signal strength condition from addresses of slave nodes corresponding to all the response frames.

In step S505, the master node establishes a topological relationship between the target power line branch and the target address.

The detailed processes of the steps S501 to S505 may refer to the descriptions of the steps S101 to S105 in the first embodiment, and are not repeated herein.

In step S506, the master node exchange data with a slave node corresponding to the target power line branch based on the topological relationship.

In the embodiment, the master node may determine the actual power line branch (that is, the target power line branch) between the master node and the slave node based on the topological relationship, and performs data exchange through the actual power line branch, thereby ensuring the reliability of data exchange.

Hereinafter, an apparatus for power line communication is provided according to the present disclosure. The apparatus for power line communication described below and the method for power line communication described above may refer to each other.

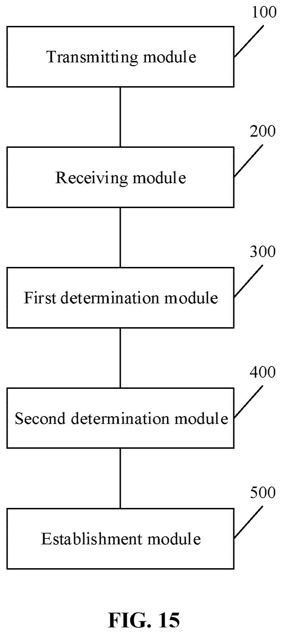

Referring to FIG. 15, the apparatus for power line communication includes: a transmitting module 100, a receiving module 200, a first determination module 300, a second determination module 400, and an establishment module 500.

The transmitting module 100 is configured to transmit one or more debugging frames to at least one slave node through a target power line branch.

The receiving module 200 is configured to receive one or more response frames corresponding to each of the debugging frames. The response frames correspond to one of the at least one slave node, and the response frames include at least an address of the slave node.

The first determination module 300 is configured to determine, for each of the debugging frames, a signal strength corresponding to each of the response frames corresponding to the debugging frame.

The second determination module 400 is configured to determine, based on signal strengths corresponding to all the response frames, a target address meeting a predetermined signal strength condition from addresses of slave nodes corresponding to all the response frames.

The establishment module 500 is configured to establish a topological relationship between the target power line branch and the target address.

In the embodiment, the apparatus for power line communication may further include a data exchanging module. The data exchanging module is configured to exchange data with a slave node corresponding to the target power line branch based on the topological relationship.

The transmitting module 100 may be configured to: determine one of multiple power line branches as the target power line branch, and transmit the one or more debugging frames to the at least one slave node through the target power line branch.

The first determination module 300 may be configured to: determine, for each of the debugging frames, a signal strength of a slave node response signal corresponding to each of the response frames corresponding to the debugging frame.

The response frame may further include a signal strength of a master node debugging signal corresponding to the debugging frame. Accordingly, the first determining module 300 may be configured to: determine, for each of the debugging frames, a signal strength of a slave node return signal corresponding to each of the response frames corresponding to the debugging frame; obtain a signal strength of a master node debugging signal corresponding to the debugging frame in each of the response frames; and determine, for each of the response frames, the signal strength corresponding to the response frame based on the signal strength of the slave node return signal corresponding to the response frame and the signal strength of the master node debugging signal corresponding to the debugging frame in the response frame.

In the embodiment, the second determination module 400, in a case that the one or more debugging frames include one debugging frame, may be configured to: compare the signal strengths corresponding to all the response frames to determine a target response frame with a strongest signal strength from all the response frames; and determine an address of a slave node in the target response frame as the target address.

In the embodiment, the second determination module 400, in a case that the one or more debugging frames include multiple debugging frames, may be configured to: determine, based on the addresses of the slave nodes corresponding to all the response frames, response frames corresponding to the addresses of all the slave nodes from all the response frames; determine, based on signal strengths corresponding to the response frames corresponding to the addresses of all the slave nodes, signal strengths corresponding to the addresses of all the slave nodes; and compare the signal strengths corresponding to the addresses of all the slave nodes to determine a target address with a strongest signal strength from the addresses of all the slave nodes.

The second determination module 400 may be configured to determine, based on the signal strengths corresponding to the response frames corresponding to the addresses of all the slave nodes, the signal strengths corresponding to the addresses of all the slave nodes by: determining, for each of the addresses of all the slave nodes, an average value and/or a variance value of the signal strengths corresponding to the response frames corresponding to an address of the slave node as a signal strength corresponding to the address of the slave node.

The apparatus for power line communication may further include a first obtaining module and a deduplication module.

The first obtaining module is configured to obtain target addresses corresponding to all the power line branches.

The deduplication module is configured to perform, in a case of determining that the target addresses corresponding to all the target power line branches include duplicate target addresses, deduplication processing on the target addresses corresponding to all the target power line branches.

In the embodiment, the apparatus for power line communication may further include a second obtaining module and a message transmitting module.

The second obtaining module is configured to obtain a communication message.

The message transmitting module is configured to transmit the communication message to the target power line branch in the topological relationship in a case that a target slave node address in the communication message is same as the target address in the topological relationship, so that a slave node corresponding to the target slave node address receives the communication message through the target power line branch, responds to the communication message and returns data.

In the embodiment, the apparatus for power line communication may further include a storage module.

The storage module is configured to store the topological relationship between the target power line branch and the target address.

Hereinafter, a photovoltaic system is provided according to the present disclosure. The photovoltaic system described below and the method for power line communication described above may refer to each other.

The photovoltaic system includes: at least one master node and at least one slave node. The master node may include an inverter, and the slave node may include a combiner box or an optimizer.

Corresponding to a combiner box, the inverter may be a centralized inverter. Corresponding to an optimizer, the inverter may be a string inverter.

The inverter is configured to: transmit one or more debugging frames to a combiner box or an optimizer corresponding to the inverter through a target power line branch; receive one or more response frames corresponding to each of the debugging frames, where the response frames correspond to one of the combiner box or the optimizer corresponding to the inverter, and the response frames include at least an address of the combiner box or the optimizer; determine, for each of the debugging frames, a signal strength corresponding to each of the response frames corresponding to the debugging frame; determine, based on signal strengths corresponding to all the response frames, a target address meeting a predetermined signal strength condition from addresses of combiner boxes or optimizers corresponding to all the response frames; and establish a topological relationship between the target power line branch and the target address.

The combiner box or the optimizer is configured to response to the debugging frames and return response frames to the inverter.

It should be noted that each of the embodiments focuses on differences from other embodiments, and the similar parts between the embodiments may be referred to each other. Since the apparatus embodiments are similar to the method embodiments, the descriptions of the apparatus embodiments are relatively simple, and one may refer to the descriptions of the method embodiments for relevant information.

Finally, it should also be noted that in the present disclosure, relational terms such as "first" and "second" are only used to distinguish one entity or operation from another, and do not necessarily require or imply that any actual relationship or order between these entities or operations. Furthermore, the term "comprise", "include" or any other variation thereof is intended to cover a non-exclusive inclusion, so that a process, a method, an article, or a device including a set of elements includes not only those elements, but also other elements not expressly listed or elements inherent in such process, method, article, or device. Unless expressively limited, the statement "including a..." does not exclude the case that other similar elements may exist in the process, method, article or device including the elements.

For convenience of description, the apparatus is divides into modules based on functions for description. Apparently, the functions of modules may be implemented in the same or multiple software and/or hardware in implementing the present disclosure.

As can be seen from the above description of the embodiments, those skilled in the art can clearly understand that the present disclosure may be implemented through software and necessary general hardware platforms. Based on the understanding, the technical solution of the present disclosure may be implemented as a software product, either in essence or as a contribution to existing technology. The computer software product may be stored in a storage medium, such as a ROM/RAM, a magnetic disk and a compact disc. The computer software product includes several instructions for causing a computer device (which may be a personal computer, a server, a network device and the like) to perform method described in the embodiments of the present disclosure or in parts of the embodiments of the present disclosure.

The method and the apparatus for power line communication, and the photovoltaic system according to the present disclosure are described in detail above. In this specification, embodiments are provided for illustrating the principle and implementation of the present disclosure. The descriptions of the above embodiments are only used for facilitating the understanding of the method of the present disclosure and the core idea of the method. In addition, for those skilled in the art, the specific implementations and the application scopes may be changed based on the idea of the present disclosure. In summary, the content of this specification should not be understood as a limitation to the present disclosure.

## Claims

1. A method for power line communication, applied to a photovoltaic system comprising at least one master node and at least one slave node, and **characterized in**:
transmitting, by the master node, one or more debugging frames to the at least one slave node through a target power line branch;
receiving, by the master node, one or more response frames corresponding to each of the debugging frames, wherein the response frames correspond to one of the at least one slave node, and the response frames comprise at least an address of the slave node;
determining, for each of the debugging frames by the master node, a signal strength corresponding to each of the response frames corresponding to the debugging frame;
determining, by the master node based on signal strengths corresponding to all the response frames, a target address meeting a predetermined signal strength condition from addresses of slave nodes corresponding to all the response frames; and
establishing, by the master node, a topological relationship between the target power line branch and the target address.

2. The method according to claim 1, further comprising:
exchanging data, by the master node, with a slave node corresponding to the target power line branch based on the topological relationship.

3. The method according to claim 1, wherein before the transmitting, by the master node, the one or more debugging frames to the at least one slave node through the target power line branch, the method further comprises:
determining, by the master node, one of a plurality of power line branches as the target power line branch.

4. The method according to claim 1, wherein the determining, for each of the debugging frames by the master node, a signal strength corresponding to each of the response frames corresponding to the debugging frame comprises:
determining, for each of the debugging frames by the master node, a signal strength of a slave node response signal corresponding to each of the response frames corresponding to the debugging frame.

5. The method according to claim 1, wherein the response frames further comprises a signal strength of a master node debugging signal corresponding to the debugging frame.

6. The method according to claim 5, wherein the determining, for each of the debugging frames by the master node, a signal strength corresponding to each of the response frames corresponding to the debugging frame comprises:
determining, for each of the debugging frames by the master node, a signal strength of a slave node return signal corresponding to each of the response frames corresponding to the debugging frame;
obtaining, by the master node, a signal strength of a master node debugging signal corresponding to the debugging frame in each of the response frames; and
determining, for each of the response frames by the master node, the signal strength corresponding to the response frame based on the signal strength of the slave node return signal corresponding to the response frame and the signal strength of the master node debugging signal corresponding to the debugging frame in the response frame.

7. The method according to claim 1, wherein in a case that the one or more debugging frames comprise one debugging frame, the determining, by the master node based on signal strengths corresponding to all the response frames, a target address meeting a predetermined signal strength condition from addresses of slave nodes corresponding to all the response frames comprises:
comparing, by the master node, the signal strengths corresponding to all the response frames to determine a target response frame with a strongest signal strength from all the response frames; and
determining, by the master node, an address of a slave node in the target response frame as the target address.

8. The method according to claim 1, wherein in a case that the one or more debugging frames comprise a plurality of debugging frames, the determining, by the master node based on signal strengths corresponding to all the response frames, a target address meeting a predetermined signal strength condition from addresses of slave nodes corresponding to all the response frames comprises:
determining, by the master node based on the addresses of the slave nodes corresponding to all the response frames, response frames corresponding to the addresses of all the slave nodes from all the response frames;
determining, by the master node based on signal strengths corresponding to the response frames corresponding to the addresses of all the slave nodes, signal strengths corresponding to the addresses of all the slave nodes; and
comparing, by the master node, the signal strengths corresponding to the addresses of all the slave nodes to determine a target address with a strongest signal strength from the addresses of all the slave nodes.

9. The method according to claim 8, wherein the determining, by the master node based on signal strengths corresponding to the response frames corresponding to the addresses of all the slave nodes, signal strengths corresponding to the addresses of all the slave nodes comprises:
determining, for each of the addresses of all the slave nodes by the master node, an average value and/or a variance value of the signal strengths corresponding to the response frames corresponding to an address of the slave node as a signal strength corresponding to the address of the slave node.

10. The method according to claim 3, wherein after determining, by the master node based on the signal strengths corresponding to all the response frames, the target address meeting the predetermined signal strength condition from the addresses of the slave nodes corresponding to all the response frames, the method further comprises:
performing, by the master node in a case that target addresses are determined for all the target power line branches and the target addresses comprise duplicate target addresses, deduplication processing on the target addresses corresponding to all the target power line branches; and
the establishing, by the master node, a topological relationship between the target power line branch and the target address comprises:
establishing, by the master node, a topological relationship between all the target power line branches and the target addresses after deduplication processing corresponding to all the target power line branches.

11. The method according to claim 1, wherein after establishing, by the master node, the topological relationship between the target power line branch and the target address, the method further comprises:
obtaining, by the master node, a communication message; and
transmitting, by the master node, the communication message to the target power line branch in the topological relationship in a case that a target slave node address in the communication message is same as the target address in the topological relationship, wherein a slave node corresponding to the target slave node address receives the communication message through the target power line branch, responds to the communication message and returns data.

12. The method according to claim 3, wherein after establishing, by the master node, the topological relationship between the target power line branch and the target address, the method further comprises:
storing, by the master node, a topological relationship between all target power line branches and target addresses corresponding to the target power line branches.

13. An apparatus for power line communication, **characterized in**:
a transmitting module, configured to transmit one or more debugging frames to at least one slave node through a target power line branch;
a receiving module, configured to receive one or more response frames corresponding to each of the debugging frames, wherein the response frames correspond to one of the at least one slave node, and the response frames comprise at least an address of the slave node;
a first determination module, configured to determine, for each of the debugging frames, a signal strength corresponding to each of the response frames corresponding to the debugging frame;
a second determination module, configured to determine, based on signal strengths corresponding to all the response frames, a target address meeting a predetermined signal strength condition from addresses of slave nodes corresponding to all the response frames; and
an establishment module, configured to establish a topological relationship between the target power line branch and the target address.

14. A photovoltaic system, **characterized in**:
the photovoltaic system comprises at least one master node and at least one slave node;
the master node comprises an inverter, and the slave node comprises a combiner box or an optimizer;
the inverter is configured to:
transmit one or more debugging frames to a combiner box or an optimizer corresponding to the inverter through a target power line branch;
receive one or more response frames corresponding to each of the debugging frames, wherein the response frames correspond to one of the combiner box or the optimizer corresponding to the inverter, and the response frames comprise at least an address of the combiner box or the optimizer;
determine, for each of the debugging frames, a signal strength corresponding to each of the response frames corresponding to the debugging frame;
determine, based on signal strengths corresponding to all the response frames, a target address meeting a predetermined signal strength condition from addresses of combiner boxes or optimizers corresponding to all the response frames; and
establish a topological relationship between the target power line branch and the target address; and
the combiner box or the optimizer is configured to response to the debugging frames and return response frames to the inverter.
